# EUROPÄISCHE PATENTANMELDUNG

(11) **EP 1 215 000 A1**
(43) Veröffentlichungstag der Anmeldung: **19.06.2002**
(21) Anmeldenummer: 01129912.0
(22) Anmeldetag: 15.12.2001
(51) Int. Cl.: B23B 31/107, B23B 31/00

(54) **Werkzeughalter**

(30) Priorität: 16.12.2000 DE 10062882
(71) Anmelder: Adolf Würth GmbH & Co. KG, 74653 Künzelsau (DE)
(72) Erfinder: Franz, Gerhard, 74549 Wolpertshausen-Hohenberg (DE)
(74) Vertreter: Patentanwälte Ruff, Wilhelm, Beier, Dauster & Partner

(57) **Zusammenfassung**

Eine Anordnung zur Befestigung eines Werkzeugs an der Spindel eines Drehantriebs enthält einen Adapter (18), der eine Aufnahme für das Antriebsende (1) des Werkzeugschafts (2) enthält. Im Inneren der Aufnahme sind windschief zur Längsachse verlaufende Zapfen (16) vorgesehen, die in entsprechend geformten Nuten (10) des Antriebsendes des Werkzeugschafts (2) eingreifen.

## Beschreibung

Die Erfindung geht aus von einer Anordnung, mit der ein Werkzeug an einem rotierenden Antrieb angebracht werden kann. Beispielsweise kann es sich bei dem rotierenden Werkzeug um einen Bohrer mit einer Diamantkrone handeln. Bei Werkzeugen dieser Art wird ein hohes Drehmoment aufgebracht.

Es ist bereits ein Werkzeughalter für Bohr-und Meißelwerkzeuge bekannt (DE 3434076). Hier ist das Antriebsende des Werkzeugschafts in Form eines Kegelstumpfs ausgebildet, der eine umlaufende Nut mit einer abgerundeten unsymmetrischen Querschnittsform aufweist. Darüber hinaus enthält der Kegelstumpf in axialer Richtung verlaufende im Querschnitt rechtwinklige Nuten. Der Adapter enthält in axialer Richtung verlaufende Rippen, die in die Nuten eingreifen. Zur Axialsicherung werden tangentiale Stifte in die unsymmetrische Nut eingedrückt. Die Eindrückrichtung der Stifte verläuft schräg zur Längsachse des Werkzeugs.

Weiterhin bekannt ist ein Werkzeughalter (US 3533638), bei dem schwenkbare Finger an einem Hinterschnitt des Antriebsendes des Werkzeugs angreifen.
Bei einem weiteren bekannten Werkzeughalter (DE 205699) dienen zur Axialsicherung Kugeln, die in eine umlaufende Nut des Antriebsendes eingerückt werden. Die Drehmitnahme erfolgt durch einen diametralen Stift, der in eine diametrale Nut in dem Stirnende des Antriebsendes eingreift.

Der Erfindung liegt die Aufgabe zu Grunde, eine Anordnung zur Anbringung eines Werkzeugs an einem rotierenden Antrieb zu schaffen, der bei einfachem Aufbau lange Standzeiten ermöglicht.

Zur Lösung dieser Aufgabe schlägt die Erfindung eine Anordnung mit den im Anspruch 1 genannten Merkmalen vor. Weiterbildungen der Erfindung sind Gegenstand von Unteransprüchen, deren Wortlaut ebenso wie der Wortlaut der Zusammenfassung durch Bezugnahme zum Inhalt der Beschreibung gemacht wird.

Das Antriebsende des Werkzeugschafts wird in den an der Drehspindel des Antriebs angebrachten Adapter eingeschoben, wobei dann eine Drehmitnahme und eine axiale Sicherung hergestellt werden. Das Antriebsende wird in dem Adapter festgelegt, so dass das Werkzeug fest mit dem Adapter und damit mit dem Drehantrieb verbunden ist.

In Weiterbildung der Erfindung kann das Antriebsende des Werkzeugschafts einen zylindrischen Abschnitt und die Aufnahme einen zylindrischen Innenraum zu der Aufnahme des zylindrischen Abschnittes aufweisen. Es kann dabei vorgesehen sein, dass dieser zylindrische Abschnitt bis zu dem freien Ende des Antriebsendes des Werkzeugschafts reicht. Dadurch wird eine gute und dauerhafte axiale Ausrichtung des Werkzeugs erreicht, das ja nur einseitig eingespannt ist.

Erfindungsgemäß kann das Antriebsende in dem Teil, der mit der Aufnahme zusammenwirkt, eine umlaufende Nut aufweisen, die einen Teil der Axialsicherung bildet. Insbesondere kann dabei vorgesehen sein, dass diese umlaufende Nut kurz vor dem freien Ende des Antriebsendes angeordnet ist, beispielsweise in dem erwähnten zylindrischen Abschnitt.

Der Adapter kann zur Bildung der Axialsicherung Klemmelemente aufweisen, die in die Nut einrückbar sind. Das Einrücken geschieht durch eine Bewegung, die mindestens eine radiale Komponente aufweist, vorzugsweise in radialer Richtung.

Es kann vorgesehen sein, dass die Nut einen abgerundeten Querschnitt aufweist, bei dem es sich um ein symmetrischen Querschnitt handeln kann.

In Weiterbildung der Erfindung kann vorgesehen sein, dass die Klemmelemene ebenfalls mindestens in ihrem radial inneren Bereich einen abgerundeten Querschnitt aufweisen.

Als besonders günstig hat sich herausgestellt, wenn als Klemmelemente Kugeln verwendet werden, wobei vorzugsweise mehrere gleichmäßig über den Umfang verteilte Kugeln zur Anwendung kommen. Diese können vorzugsweise derart in radialen Öffnungen oder Durchbrechnungen gehaltert sein, dass sie gegen ein Herausfallen nach innen gesichert sind.

Zum Einrücken der Klemmelemente kann der Adapter beispielsweise in Weiterbildung einen äußeren bewegbaren Ring aufweisen, der eine Schrägfläche enthält, mit der er an den Klemmelementen zu deren Einrücken in radialer Richtung nach innen angreifen kann.

Der Ring kann vorzugsweise so gehaltert sein, dass er sowohl in seiner Klemmstellung als auch in seiner Freigabestellung rastend festgelegt ist. Dies erleichtert dem Benutzer die Bedienung.

Die Bewegungsrichtung des Rings kann eine axiale oder auch eine Schraubbewegung sein. Es hat sich als besonders günstig herausgestellt, den Ring verdrehbar zu haltern.

Erfindungsgemäß kann in Weiterbildung die Drehmitnahme Vorsprünge und mindestens teilweise in axialer Richtung verlaufende entsprechende Vertiefungen aufweisen, die an dem Antriebsende des Werkzeugschafts und der Innenseite der Aufnahme vorgesehen sein können. Die Vorsprünge können entweder an der Innenseite der Aufnahme oder der Außenseite des Antriebsendes des Werkzeugschafts vorgesehen sein, und die Vertiefungen an den jeweils anderen Teilen. Es ist aber auch möglich, die Vorsprünge an beiden Teilen und dann auch die Vertiefungen an beiden Teilen vorzusehen.

Es hat sich als besonders sinnvoll herausgestellt, die Vorsprünge als langgestreckte Rippen auszubilden, um größere Anlageflächen für die Drehmitnahme zu bilden. Die Vertiefungen können ebenfalls mit Vorteil als Nuten ausgebildet sein.

In nochmaliger Weiterbildung der Erfindung kann vorgesehen sein, dass die Rippen und Nuten schräg zur Längsachse verlaufen. Dies erleichtert das Einführen des Antriebsendes des Werkzeugschafts in die Aufnahme des Adapters.

In nochmaliger Weiterbildung kann auch vorgesehen sein, dass die Rippen und Nuten windschief zur Längsachse verlaufen, also auch in einer Seitenansicht schräg zur Längsachse.

Es kann erfindungsgemäß mit Vorteil vorgesehen sein, die Orientierung der Rippen und Nuten so anzuordnen, dass beim Antrieb des Werkzeugs eine zunehmende Verspannung zwischen den durch diese drehverbundenen Teilen erzeugt wird. Bei einem im Uhrzeigersinn wirkenden Antrieb, also einer Rechtsdrehung, sind die Rippen und Nuten also nach Art eines rechts orientierten Steilgewindes angeordnet.

In Weiterbildung der Erfindung kann vorgesehen sein, dass der die Drehmitnahme aufweisende Abschnitt des Werkzeugschafts von dem freien Ende des Antriebsendes einen Abstand aufweist. Dieser Abstand kann beispielsweise von dem eingangs erwähnten zylindrischen Abschnitt gebildet werden. Der Abschnitt, an dem die Drehmitnahme ausgebildet ist, kann mit Vorteil ebenfalls zylindrisch ausgebildet sein oder mit einer geringen Entformungsschräge.

In nochmaliger Weiterbildung der Erfindung kann vorgesehen sein, dass die Rippen als zylindrische Stifte mit kreisrundem Querschnitt ausgebildet sind, vorzugsweise aus gehärtetem oder hartem Material. Diese zylindrischen Stifte können in entsprechende Nuten des Antriebsendes und/oder der Aufnahme eingepresst werden, so dass sie auf diese Weise mit dem entsprechenden Teil fest verbunden sind.

Weitere Merkmale, Einzelheiten und Vorzüge Erfindung ergeben sich aus der folgenden Beschreibung einer bevorzugten Ausführungsform der Erfindung sowie anhand der Zeichnung. Hierbei zeigen:
- Fig. 1: in einer teilweise geschnittenen Seitenansicht das Antriebsende eines Werkzeugschafts;
- Fig. 2: die Seitenansicht des Werkzeugschafts mit einer schräg verlaufenden Nut;
- Fig. 3: eine teilweise geschnittene Seitenansicht des zugehörigen Adapters;
- Fig. 4: einen Axialschnitt durch den Adapter;
- Fig. 5.: eine teilweise geschnittene Seitenansicht des Adapters im zusammengesetzten Zustand;
- Fig. 6: einen Querschnitt durch die Anordnung der Figur 5;
- Fig. 7: einen Querschnitt durch die Anordnung der Figur 5 längs Linie VII-VII.

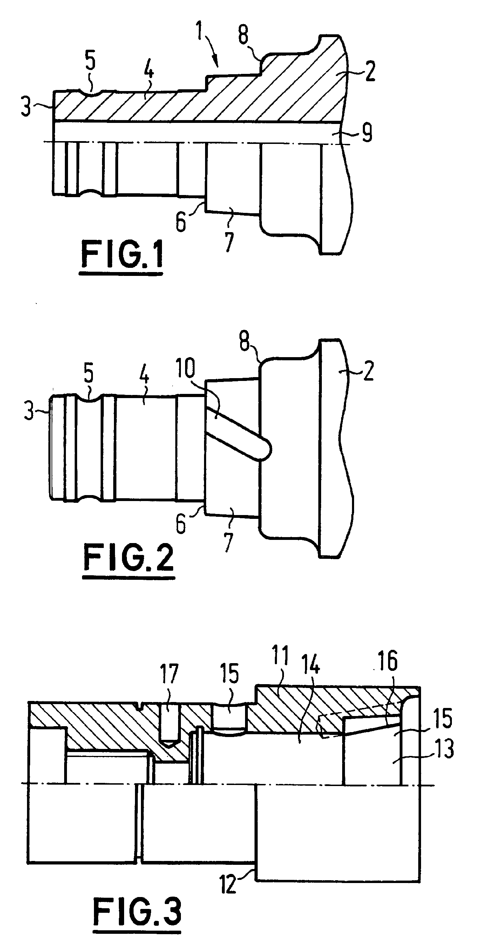

Figur 1 zeigt in einer längs der Mittelachse geschnittenen Seitenansicht das Antriebsende 1 eines Werkzeugschafts 2. Von der Stirnfläche 3 ausgehend enthält das Antriebsende zunächst einen zylindrischen Abschnitt 4, der an seiner Außenseite kurz vor der Stirnfläche 3 eine umlaufende abgerundete Nut 5 enthält. An den zylindrischen Abschnitt 4 schließt sich über eine Stufe 6 ein nochmaliger zylindrischer Abschnitt 7 an, der eine gewisse Einführungsschräge aufweist. Dieser Abschnitt 7 endet in einer weiteren abgerundeten Stufe 8, die damit gleichzeitig das Ende des Antriebsendes 1 bildet. Das Antriebsende 1 ist von einer axialen Bohrung 9 durchsetzt.

Figur 2 zeigt die Seitenansicht in ungeschnittenem Zustand. In dem Abschnitt 7 ist in der Außenseite eine schräg zur Längsachse verlaufende Nut 10 ausgebildet, die zu der Stufe 6 bzw. der von der Stufe 6 gebildeten ringförmigen Stirnfläche hin offen ist. Das gegenüberliegende dem freien Ende 3 des Antriebsendes 1 abgewandte Ende der Nut 10 ist geschlossen.

Figur 3 zeigt in einer ähnlichen Ansicht wie Figur 1 den Hauptteil des Adapters der von der Erfindung vorgeschlagenen Verbindungsanordnung. Der Adapter ist als Hülse 11 ausgebildet, die an ihrer Außenseite zwei zylindrische durch eine Stufe 12 getrennte Abschnitte aufweist. Von beiden Stirnseiten aus gehen Öffnungen in das Innere des Adapters 11 hinein. Rechts in Figur 3 ist die Aufnahme 13 für das Antriebsende des Werkzeugschafts ausgebildet. Die Aufnahme enthält einen ersten Innenraum 14, dessen axiale Erstreckung und Durchmesser etwa dem Abschnitt 4 des Antriebsendes 1 des Werkzeugschafts entspricht. Kurz vor dem inneren Ende dieses Innenraums 14 sind mehrere radial verlaufende Durchbrechnungen 15 vorgesehen, deren Öffnung in den Innenraum 14 etwas verkleinert ist.

An den Innenraum 14 mit dem dem Abschnitt 4 entsprechenden Durchmesser schließt sich ein zweiter Abschnitt 15 an, der einen Teil der Drehmitnahme bildet. In diesen Abschnitt sind einzelne schräg zur Längsachse verlaufende Zapfen 16 eingepresst, die im Querschnitt kreisrund sind. Diese Zapfen 16 bilden zusammen mit den Nuten 10 des Antriebsendes die Drehmitnahme für das Werkzeug.

Mit einem gewissen Abstand von den Öffnungen 15 ist in die Außenseite der Hülse 11 eine Sackbohrung 17 eingebracht, deren Zweck später noch erläutert werden wird.

Aus dem Vergleich der Figuren 2 und 3 ergibt sich, dass der Verlauf der Nuten 10 und der ihnen zugeordneten Zapfen 16 sowohl im Längsschnitt, siehe Figur 3, schräg zur Längsachse verläuft, als auch in einer abgewickelten Seitenansicht, was man der Figur 2 entnehmen kann. Der Verlauf dieser Nuten 10 und Zapfen 16 ist also windschief zur Längsachse.

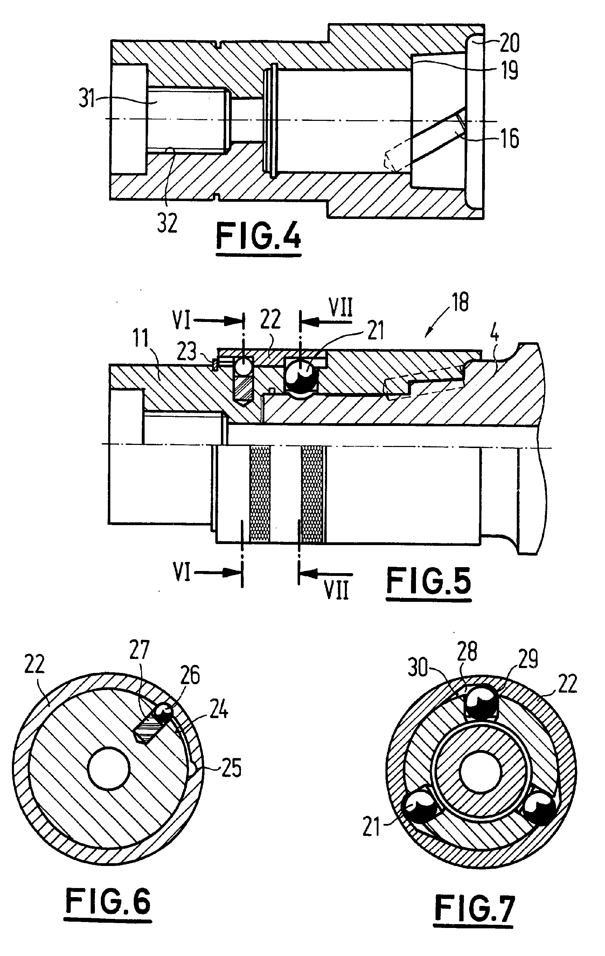

Figur 4 zeigt nun einen vollständigen Längsschnitt durch die Hülse 11 des Adapters. Auch hier ist der schräge Verlauf der Zapfen 16 zu sehen. Der Schnitt der Figur 4 ist durch eine andere Ebene gelegt, so dass die Durchbrechnungen 15 nicht zu sehen sind.

Figur 5 zeigt nun wiederum eine teilweise geschnittene Seitenansicht, in der das Antriebsende 4 des Werkzeugschafts in den Adapter 18 eingesetzt dargestellt ist. Die Seitenansicht ist wiederum so dargestellt, dass oberhalb der Längsachse ein Schnitt gezeichnet ist, während unterhalb der Längsachse die Ansicht zu sehen ist.

Das Antriebsende 4 ist so weit in die Hülse 11 des Adapters 18 eingeschoben, dass die Stufen 6 und 8 an den entsprechenden Gegenflächen 19 und 20 zur Anlage kommen. Gleichzeitig sind die Zapfen 16 in die Nuten 10 eingerückt. Das Einschieben geschieht also in einer leichten Drehbewegung. In diesem Montagezustand ist die Nut 5 axial gegenüber den Durchbrechnungen 15 ausgerichtet. In den Durchbrechnungen 15 sitzen Kugeln 21, die etwas über die Außenseite des entsprechenden Abschnitts der Hülse 11 vorspringen.

Auf der Außenseite des Abschnitts der Hülse 11 mit kleinerem Durchmesser ist ein verdrehbarer Ring 22 gelagert, der zwischen der Stufe 12 und einem Sprengring 23 axial gesichert ist. Der Ring 22 weist einen mittleren Abschnitt auf, mit dem er, siehe Figur 5, direkt auf der Außenseite der Hülse aufsitzt. Der Ring dient dazu, die Kugeln 21 zu sichern und nach innen zu drücken. Die Funktion und Wirkungsweise des Rings 22 geht am besten aus den Figuren 6 und 7 hervor. Hierbei zeigt die Figur 6 einen Querschnitt durch die Anordnung der Figur 5 längs Linie VI-VI.

Der Ring 22, dessen Innendurchmesser dem Außendurchmesser des entsprechenden Abschnitts der Hülse 11 entspricht, weist an einer bestimmten Stelle eine sich über einen geringen Bogen erstreckende Nut 24 auf, die an beiden Enden durch eine Vertiefung 25 begrenzt ist. In diese Nut 24 und die Vertiefungen 25 wird eine Sperrkugel 26 eingedrückt, und zwar mit Hilfe einer Feder 27. Diese Feder sitzt in der bereits erwähnten Sackbohrung 17, siehe Figur 3. Durch das Eindrücken der Sperrkugel 26 in die Vertiefungen 25 erfolgt eine Verrastung des Rings 22 in diesen beiden Stellungen. Der Ring 22 kann von dem Benutzer so verdreht werden, dass die Kugel die Nut 24 entlang bewegt wird.

Figur 7 zeigt einen Schnitt längs Linie VII-VII in Figur 5. Hier sind drei Kugeln 21 zu sehen, die in entsprechende Vertiefungen 28 in der Innenseite des Rings 22 eingreifen. Die Vertiefungen sind auf der einen Seite durch eine abgerundete Fläche 29 begrenzt, während sie auf der gegenüberliegenden Seite in Umfangsrichtung von Schrägflächen 30 begrenzt sind. In der dargestellten Position, die auch der Position der Figur 5 entspricht, sind die Kugeln nach außen bewegt. Wird nun der Ring 22 in Figur 7 im Uhrzeigersinn verdreht, so drücken die die drei Schrägflächen 30 die drei Kugeln 21 radial nach innen, so dass sie in die Nut 5 eingerückt werden. In dieser Position werden sie dann festgehalten, so dass damit eine axiale Sicherung des Werkzeugs in dem Adapter erreicht wird.

Auf der der Aufnahme 13 entgegengesetzten Seite weist der Adapter eine Innenbohrung 31 mit Gewinde 32 auf. Hiermit wird der Adapter auf eine Drehspindel eines Drehantrieb aufgeschraubt.

## Patentansprüche

1. Anordnung zum Anbringen eines Werkzeugs an einem rotierenden Antrieb, mit
1.1 einem Adapter (18), der
1.1.1 mit der Spindel des Antriebs zu seiner Drehung verbindbar ist,
1.2 einer Aufnahme (13) für das Antriebsende (4) des Werkzeugs, die
1.2.1 in dem Adapter (18) ausgebildet ist und
1.2.2 eine Drehmitnahme und
1.2.3 eine Axialsicherung für das Antriebsende (4) des Werkzeugschafts aufweist, sowie mit
1.3 einer Festlegeeinrichtung zur lösbaren Festlegung des Antriebsendes (4) des Werkzeugschafts.

2. Anordnung nach Anspruch 1, bei der das Antriebsende (4) des Werkzeugschafts einen zylindrischen Abschnitt (4) und die Aufnahme (13) einen zylindrischen Innenraum (14) zu seiner Aufnahme aufweist.

3. Anordnung nach Anspruch 1 oder 2, mit einer umlaufenden Nut (5) als Teil der Axialsicherung.

4. Anordnung nach Anspruch 3, bei der der Adapter (18) radial in die Nut (5) einrückbare Klemmelemente aufweist.

5. Anordnung nach Anspruch 3 oder 4, bei der die Nut (5) einen abgerundeten Querschnitt aufweist.

6. Anordnung nach Anspruch 4 oder 5, bei der die Klemmelemente mindestens in ihrem radial inneren Bereich einen abgerundeten Querschnitt aufweisen.

7. Anordnung nach einem der Ansprüche 4 bis 6, bei der die Klemmelemente als Kugeln (21) ausgebildet und gegen ein Herausfallen nach innen gesichert sind.

8. Anordnung nach einem der Ansprüche 4 bis 7, bei der zum Einrücken der Klemmelemente ein äußerer bewegbarer Ring (22) mit einer Schrägfläche (30) für die Klemmelemente vorgesehen ist.

9. Anordnung nach Anspruch 8, bei der der Ring (22) in Klemmstellung und/oder Freigabestellung rastend festgelegt ist.

10. Anordnung nach Anspruch 9, bei der der Ring (22) verdrehbar gehaltert ist.

11. Anordnung nach einem der vorhergehenden Ansprüche, bei der die Drehmitnahme Vorsprünge und mindestens teilweise in axialer Richtung verlaufende entsprechende Vertiefungen aufweist, die an dem Antriebsende (1) des Werkzeugschafts und der Innenseite der Aufnahme (13) vorgesehen sind.

12. Anordnung nach Anspruch 11, bei der die Vorsprünge als Rippen und die Vertiefungen als Nuten (10) ausgebildet sind.

13. Anordnung nach Anspruch 12, bei der die Rippen und Nuten (10) schräg zur Längsachse verlaufen.

14. Anordnung nach Anspruch 12 oder 13, bei der die Rippen und Nuten (10) windschief zur Längsachse verlaufen.

15. Anordnung nach einem der vorhergehenden Ansprüche, bei der der die Drehmitnahme aufweisende Abschnitt des Werkzeugschafts von dem freien Ende des Antriebsendes einen Abstand aufweist.

16. Anordnung der Anspruch 12 oder 13, bei der die Rippen als zylindrische Stifte (16) mit kreisrundem Querschnitt ausgebildet sind, die in entsprechenden Nuten des Antriebsendes und/oder der Aufnahme (13) eingepresst sind.
